# EUROPÄISCHE PATENTSCHRIFT

(11) **EP 0 560 833 B1**
(45) Veröffentlichungstag und Bekanntmachung des Hinweises auf die Patenterteilung: **25.01.1995**
(21) Anmeldenummer: 92900070.1
(22) Anmeldetag: 29.11.1991
(51) Int. Cl.: F16J 15/32, F16J 15/16

(54) **ANORDNUNG ZUM ABDICHTEN EINES ZWISCHENRAUMES**
DEVICE FOR SEALING OFF A GAP
DISPOSITIF POUR L'ETANCHEIFICATION D'UN INTERSTICE

(30) Priorität: 04.12.1990 DE 4038619
(43) Veröffentlichungstag der Anmeldung: 22.09.1993
(73) Patentinhaber: Busak + Shamban GmbH & Co., D-70565 Stuttgart (DE)
(72) Erfinder: JORDAN, Holger, D-7022 Leinfelden-Echterdingen (DE)
(74) Vertreter: KOHLER SCHMID + PARTNER
(86) Internationale Anmeldenummer: DE9100947
(87) Internationale Veröffentlichungsnummer: WO9210698

(56) Entgegenhaltungen:
- CH-A- 419 750
- DE-A- 2 008 487
- DE-A- 3 738 512
- FR-A- 888 602
- GB-A- 882 349
- US-A- 2 216 353

## Beschreibung

Die Erfindung geht aus von einer Anordnung zum Abdichten eines Zwischenraumes zwischen zwei zueinander konzentrischen, gegeneinander beweglichen Maschinenteilen, mit einander gegenüberliegend angeordneten Dichtflächen, die zu Randflächen von einem ringförmigen Dichtungselement aus elastischem Kunststoff hinweisen, mit einer zwischen dem ersten und zweiten Maschinenteil angeordneten, axialfixierten Stützfläche für eine Stirnfläche des Dichtungselements, das in einer Positionslage von der Stützfläche beabstandet ist und über einen Verschwenkvorgang in eine Arbeitslage überführbar ist, in der das Dichtungselement, an der Stützfläche anliegend, den Zwischenraum abdichtet.

Eine derartige Anordnung ist durch die DE-A-37 38 512 bekanntgeworden.

Bei der bekannten Anordnung ist der Dichtring einer zu einer Achse konisch und senkrecht verlaufenden Fläche eines Stützringes zugeordnet. Der Dichtring ist mit Übermaß gefertigt und weist in Ruhelage zwischen dem konisch verlaufenden Flächenabschnitt und der angrenzenden Fläche des Dichtringes einen Spalt auf. Bei Druckbeaufschlagung des Dichtringes wird der Dichtringabschnitt, der dem Spalt zugeordnet ist, in den Spalt hineingezogen. Bei derartigen Anordnungen ist die Montage des Dichtungselements oft sehr schwierig, weil der Dichtring nur mit erheblichem Kraftaufwand und unter einer Deformation in seine vorgesehene Lage gebracht werden kann. Sind die Einbauverhältnisse klein und/oder verwinkelt, so können Dichtungen dieser Art oftmals nur mit Spezialwerkzeug und unter großem Zeitaufwand fachgerecht montiert werden.

Aus der CH-A-419, 750 ist eine Anordnung bekannt, bei der der zwischen zwei zueinander konzentrischen, gegeneinander beweglichen Maschinenteilen gelegene Zwischenraum gegenüberliegend angeordnete Wandflächen aufweist. Diese Wandflächen weisen zu Dichtflächen eines Dichtungselements aus elastischem Kunststoff hin. Zwischen dem ersten und zweiten Maschinenteil ist eine axial fixierte Stützfläche für die Stirnfläche des Dichtungselements angeordnet, wobei eine der Dichtflächen des Dichtungselements in Beabstandung des Dichtungselements von der Stützfläche von den Wandflächen beabstandet ist und wobei die Dichtflächen erst bei flächenhafter Anlage des Dichtungselements an der Stützfläche dichtend auf den Wandflächen aufliegen. Bei dieser Anordnung entsteht durch die flächenhafte Anlage der Dichtung an dem bewegten Maschinenteil im Arbeitszustand eine recht hohe Reibung, die erstens zu frühzeitigem Verschleiß der Dichtung und zweitens zu einer Beeinträchtigung der Beweglichkeit des bewegenden Bauteils führen kann.

Der Erfindung liegt daher die Aufgabe zugrunde, die bekannte Anordnung derart weiterzubilden, daß unter Gewährleistung der vollständigen Abdichtung die Reibung zwischen dem bewegten Maschinenteil und des Dichtungselements minimiert wird.

Diese Aufgabe wird erfindungsgemäß dadurch gelöst, daß das Dichtungselement in der Positionslage von den beiden Dichtflächen beabstandet ist oder ohne Anpreßdruck an den Dichtflächen anliegt und daß das Dichtungselement in der Arbeitslage über Dichtkanten an den Dichtflächen dichtend anliegt, derart, daß die Dichtkanten von der Schnittlinie der Randflächen und der Stirnflächen gebildet sind.

Eine erfindungsgemäß ausgestaltete Anordnung zum Abdichten eines Zwischenraumes hat den Vorteil, daß durch die nunmehr linienhafte Abdichtkante der Kontakt zwischen dem Dichtungselement und dem beweglichen Bauteil minimiert ist und somit auch der Reibungswiderstand minimiert ist. Dadurch werden die unerwünscht an dem beweglichen Bauteil angreifenden Kräfte verringert und eine erhöhte Beweglichkeit des beweglichen Bauteils erreicht. Außerdem wird durch die geringere Reibung die Lebensdauer des Dichtungselements deutlich erhöht

Ein weiterer Vorteil der erfindungsgemäßen Anordnung ist, daß beim Hereinfahren des beweglichen Bauteiles die Anpreßkraft des Dichtungselements auf seine Unterlage und somit auch die Anpreßkraft der Dichtkante auf das bewegende Bauteil geringer ist als beim Herausfahren des beweglichen Bauteiles, was zu einer weiteren Reduzierung der anliegenden Kräfte und der Reibung unter Beibehaltung der vollen Dichtleistung führt. Beim Herausbewegen des beweglichen Bauteils ist eine höhere Dichtleistung als beim Hereinbewegen des Bauteils erforderlich, da das Druckmedium nur beim Herausführen des beweglichen Bauteiles von der Oberfläche des beweglichen Bauteiles abgeführt werden muß.

Die erfindungsgemäße Anordnung hat damit weiterhin den wesentlichen Vorteil, daß nicht nur das ausgewählte Dichtungselement einfach montiert werden kann, sondern es können auch einfach herzustellende Dichtringquerschnitte eingesetzt werden. Die erfindungsgemäßen Dichtungselemente lassen sich aufgrund ihrer filigranen Querschnittsform leicht verformen und in Positionslage bringen. Die Dichtungsgeometrie kann beispielsweise erstens durch eine Veränderung der Dichtkantenausbidung, zweitens durch eine geänderte Schrägstellung des Dichtungselements zur Achse der Anordnung, drittens durch eine Änderung der Größe einer Fläche des Dichtungselements, die einem Druckmedium ausgesetzt ist und viertens durch eine Abänderung der Querschnittsform des Dichtungselements beeinflußt werden.

Zur Erfindung gehört auch, daß das ausgewählte Dichtungselement weitgehenst kräftefrei in eine Positionslage zu bringen ist, die unmittelbar an die Arbeitslage des Dichtungselements grenzt, und daß das Dichtungselement in Arbeitslage in radialer Richtung in einem weiten Bereich druckbe- und/oder entlastbar ist.

Unter Positionslage ist hier zu verstehen, daß das Dichtungselement in einer Stellung an die abzudichtende Stelle der Maschinenteile gebracht wird, die nicht der Stellung entspricht, in der es einen Spalt oder einen Zwischenraum bzw. Zwischenräume abdichtet.

Die Arbeitslage entspricht der Stellung des Dichtungselements, in der sie bewegte Maschinenteile gegeneinander abdichtet. Diese Abdichtung kann zwischen einer Hochdruck- und Niederdruckseite erfolgen, oder die gegeneinander abzudichtenden Räume weisen gegenüber der Atmosphäre keinen erhöhten Druck auf.

Bis zur Positionslage ist das Dichtungselement auf oder an den abzudichtenden Maschinenteilen mit geringem Kraftaufwand zu verschieben. Die Positionslage ist dann erreicht, wenn das Dichtungselement zumindest punktförmig an eine Stützfläche stößt, die die Verschiebbarkeit des Dichtungselements in axialer Richtung begrenzt.

Aus der Positionslage kann das Dichtungselement entweder unter hydraulischer oder mechanischer Krafteinwirkung in die Arbeitslage überführt werden. Die Arbeitslage kann über eine Verschwenkbewegung des Dichtungselements erreicht werden.

Ist die Stützfläche auf der Niederdruckseite eines Maschinenteils angeordnet oder ausgebildet, so kann das Dichtungselement unter Druckbeaufschlagung aus der Positionslage in die Arbeitslage überführt werden. Das unter Druck stehende Medium liegt dann über der gesamten der Druckseite zugewandten Stirnfläche des Dichtungselements an. Das Druckmedium preßt einerseits das Dichtungselement an die Stützfläche und andererseits verschwenkt es das Dichtungselement gegenüber der Positionslage.

Von der Positionslage in die Arbeitslage kann das Dichtungselement auch über die mechanische Krafteinwirkung einer Gegenfläche einer Buchse gebracht werden, indem man die Gegenfläche in gewünschter Weise der Stützfläche anpaßt und die Buchse in Richtung Stützfläche verschiebt.

Die Stützfläche und die Gegenfläche können plane, spitzenförmige, konvexe oder konkave Konturen aufweisen. Je nach Kontur der Stützfläche, radialer Breite des Dichtungselements, der Größe des Anpreßdruckes des Dichtungselements an die Stützfläche und dem Material, aus dem das Dichtungselement gefertigt ist, wird entweder das Dichtungselement nur verschwenkt oder verschwenkt und gleichzeitig radial gedehnt.

Verschwenkt, oder verschwenkt und radial gedehnt wird das Dichtungselement in einem Maße, daß sie dem Anwendungsfall entsprechend dichtend an den sich gegenüberliegenden Dichtflächen der Maschinenteile anliegt.

Je nach radialer Klemmlänge, mit der die Gegenfläche des Dichtungselements auf die Stützfläche drückt, ist eine mehr oder weniger starke Druckentlastung des Dichtungselements möglich.

Die Stützfläche kann gegenüber der Achse der Anordnung schräggestellt sein, so daß das Dichtungselement je nach Winkelgröße der Schrägfläche zur Achse mehr oder weniger stark aus der Positionslage gekippt ist und die Arbeitslage einnimmt.

Die Stützfläche kann auch lotrecht zur Achse der Anordnung stehen, sofern das Dichtungselement in Positionslage gegenüber der späteren Arbeitslage des Dichtungselements schräggestellt ist.

Weiterhin lassen sich vielfältige Geometrien von Dichtkanten an dem Dichtungselement durch die Schnittlinie unterschiedlich stark zueinandergeneigter Kegelflächen ausbilden. Dabei stellen sich in der Arbeitslage des Dichtungselements Öffnungswinkel im Bereich der Dichtkante ein, die zu beiden Medienseiten hin (Hochdruck-, Niederdruckseite) geöffnet sind.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen in der Zeichnung näher erläutert. Es zeigen:
- Fig. 1: einen Ausschnitt einer erfindungsgemäßen Anordnung mit einem Dichtungselement 1 in Arbeitslage und einem Dichtungselement 1′ in Positionslage;
- Fig. 2: einen Teilquerschnitt durch eine Gasfeder mit einer erfindungsgemäßen Anordnung zum Abdichten eines Zwischenraumes mit in Arbeitslage befindlichem Dichtungselement;
- Fig. 3: einen Ausschnitt im Querschnitt von zwei gegeneinander abzudichtenden Maschinenteilen mit einer Dichtungsscheibe in Positionslage;
- Fig. 4: einen Ausschnitt wie in Fig. 4 zeigt, mit einer Dichtungsscheibe in Arbeitslage;
- Fig. 5: eine erfindungsgemäße Dichtungsscheibe in Positionslage und eine Dichtungsscheibe in Arbeitslage;
- Fig. 6: einen stark schematisiert dargestellten rechteckförmigen Querschnitt durch ein erfindungsgemäßes Dichtungselement und die Verschwenkung um eine Achse von einer Positionslage in eine gestrichelt gezeichnete Arbeitslage;
- Fig. 7: eine erfindungsgemäße Dichtungsscheibe, deren Anpressdruck an die Dichtfläche wesentlich vom Druck des anstehenden Mediums abhängt;
- Fig. 8: eine im wesentlichen druckentlastete Dichtungsscheibe;
- Fig. 9 bis Fig. 14: weitere Ausführungsformen einer erfindungsgemäßen Dichtungsscheibe mit verschiedenen Modifikationen einer Stützfläche, und Modifikationen von Dichtungsscheiben in Positionslage.

Die einzelnen Figuren der Zeichnung zeigen den erfindungsgemäßen Zustand teilweise stark schematisiert und sind nicht maßstäblich zu verstehen. Die Gegenstände der einzelnen Figuren sind teilweise stark vergrößert dargestellt, damit ihr Aufbau besser gezeigt werden kann.

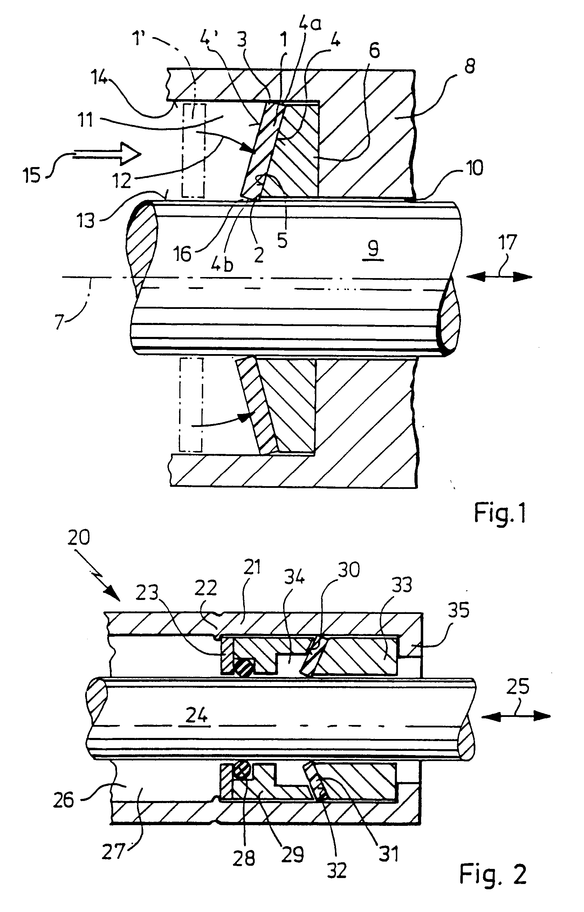

Fig. 1 zeigt ein Dichtungselement 1 mit Dichtkanten 2 und 3, wie es über eine Stirnfläche 4 an einer Stützfläche 5 eines Formteiles 6 anliegt. Das Dichtungselement 1 weist Randflächen 4a, 4b auf, die sich mit der Stirnfläche 4 und einer Stirnfläche 4′ schneiden. Die Stützfläche 5 ist zu einer Achse 7 der Anordnung schräg verlaufend ausgebildet. In Arbeitslage liegt das Dichtungselement 1 schräg zur Achse 7 zwischen einem ersten Maschinenteil 8 und einem zweiten Maschinenteil 9. Ein Zwischenraum 10 der Maschinenteile 8,9 ist mit dem Dichtungselement 1 abzudichten.

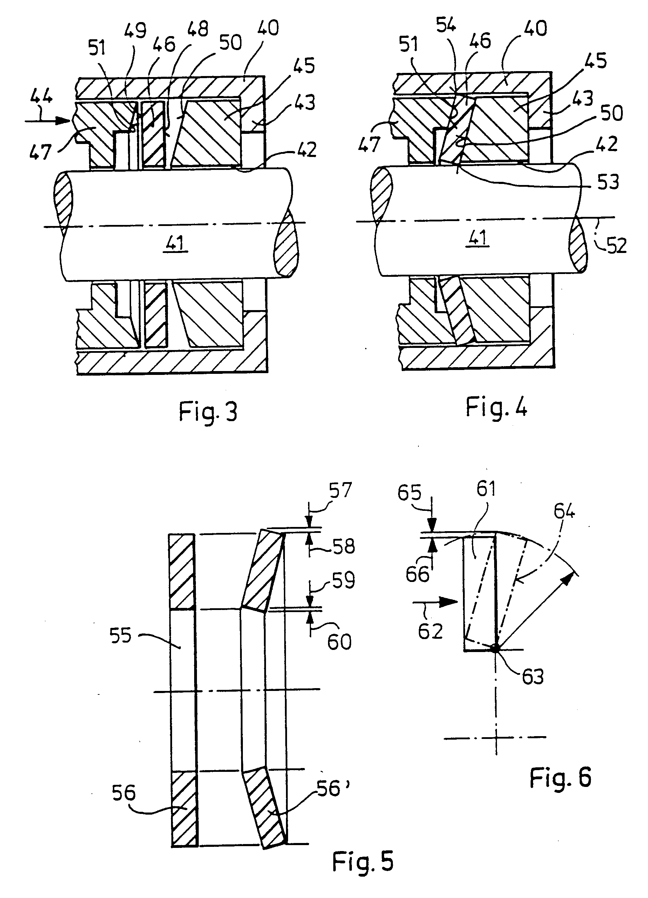

Das Dichtungselement 1′, in der Fig. 1 gestrichelt eingezeichnet, wird in eine Aussparung 11 geschoben. Während der Einführung in die Aussparung 11 und vor einer Verschwenkung des Dichtungselements 1′ in Pfeilrichtung 12 ist das Dichtungselement 1′ von einer ersten Dichtfläche 13 und einer zweiten Dichtfläche 14 beabstandet, wobei die Dichtflächen 13, 14 zu den Randflächen 4a, 4b hinweisen. Die Verschwenkung des Dichtungselements 1′ in Pfeilrichtung 12 erfolgt über eine hydraulische oder mechanische Krafteinwirkung in Pfeilrichtung 15 auf das Dichtungselement 1′. Durch den Verschwenkvorgang werden die Dichtkanten 2, 3 des im Querschnitt rechteckförmigen Dichtungselements 1 an die Dichtflächen 13, 14 gepreßt. Der Zwischenraum 10 zwischen dem ersten Maschinenteil 8 und dem zweiten Maschinenteil 9 ist damit abgedichtet. Zwischen der ersten Dichtfläche 13 und dem Dichtungselement 1 bildet sich ein Öffnungswinkel 16 aus, der, sofern ein Druckmedium anliegt, zur Hochdruckseite hin offen ist. In der Figur 1 ist beispielsweise das erste Maschinenteil 8 ortsfest und das zweite Maschinenteil 9 kann in Pfeilrichtungen 17 eine translatorische Bewegung ausführen. Aus Gründen der Übersichtlichkeit ist in der Fig. 1 die Positionslage des Dichtungselements 1′ weit beabstandet von der Arbeitslage des Dichtungselements 1 eingezeichnet. Nach der Erfindung liegen die Positionslage und die Arbeitslage näher zusammen, so wie es beispielsweise Fig. 6 zeigt.

Figur 2 zeigt einen Ausschnitt einer Gasfeder 20. Ein Zylindermantel 21 weist eine Einkerbung 22 auf, die am Innenumfang des Zylindermantels 21 einen ringförmigen Absatz bildet. Die Einkerbung 22 bildet einen Anschlag für eine Anschlagscheibe 23, die ringförmig ausgebildet ist und im Querschnitt rechteckförmig ist. Innerhalb des Zylindermantels 21 ist eine Stange 24 zentrisch über nicht gezeigte Mittel geführt und die Stange 24 ist in Pfeilrichtungen 25 verschiebbar. Ein Innenraum 26 des Zylindermantels 21 ist mit einem Gas- Ölgemisch 27 gefüllt, das unter Druck steht und gegenüber der Umgebung abzudichten ist.

An die dem Innenraum 26 abgewandte Ringfläche der Anschlagscheibe 23 grenzt ein O-Ring 28 und eine Ölvorlagebuchse 29. Die Ölvorlagebuchse 29 ist mit einer zu der Symmetrieachse der Gasfeder 20 schrägverlaufenden Gegenfläche 30 versehen. Mit der Gegenfläche 30 drückt die Ölvorlagebuchse 29 ein Dichtungselement 31 an eine Stützfläche 32 einer Führungsbuchse 33. Die Stützfläche 32 verläuft schräg zur Mantelfläche der Stange 24. Die Stützfläche 32 und die Gegenfläche 30 sind bezüglich Formgebung und Kontur aufeinander abgestimmt. Mit dem Innenraum 26 in Verbindung stehend weist die Ölvorlagebuchse 29 einen Raum 34 auf, der ebenfalls das Öl- Gasgemisch 27 des Innenraumes 26 aufnimmt. Der O-Ring 28 hat die Aufgabe, bei senkrechtgestellter Gasfeder 20 einen Anteil des Gas- Ölgemisches 27 im Raum 34 zu halten, damit die Dichtkante des Dichtungselements 31 ständig einem Schmierfilm ausgesetzt ist. Die Anschlagscheibe 23, die Ölvorlagebuchse 29, das Dichtungselement 31 und die Führungsbuchse 33 werden über einen ringförmigen Absatz 35 axial fixiert. Der ringförmige Absatz 35 wird erst dann ausgebildet, wenn die Anordnung zum Abdichten der Stange 24 gegenüber dem Zylindermantel 21 in den Zylindermantel 21 eingebracht worden ist.

Figur 3 zeigt Ausschnitte eines Maschinenteils 40 und einer Welle 41, die geführt in dem Maschinenteil 40 gehalten ist. Ein Zwischenraum 42 zwischen dem Maschinenteil 40 und der Welle 41 ist abzudichten. Das ein Gehäuse bildende Maschinenteil 40 endet in einem Absatz 43, der als Anschlag für die in das Maschinenteil 40 einzuschiebenden Teile dient. In Pfeilrichtung 44 wird zuerst ein erster Distanzring 45 in das Maschinenteil 40 eingeschoben. Danach wird eine Dichtungsscheibe 46 mit Spiel über die Welle 41 in die in der Figur 3 gezeigte Positionslage geschoben. An die Dichtungsscheibe 46 schließt sich ein zweiter Distanzring 47 an. Zu den axialgerichteten Stirnflächen 48, 49 der Dichtungsscheibe 46 ist eine angrenzende Stützfläche 50 des ersten Distanzringes 45 und eine Gegenfläche 51 des zweiten Distanzringes 47 schräggestellt. Die in der Figur 3 gezeigte Stellung definiert die Positionslage der Dichtungsscheibe 46.

Figur 4 zeigt den gegenüber Figur 3 verschobenen zweiten Distanzring 47. Der zweite Distanzring 47 drückt über die Gegenfläche 51 die Dichtungsscheibe 46 in eine zur Achse 52 schrägverlaufende Lage. Die Dichtungsscheibe 46 liegt an der Stützfläche 50 an. Durch die mechanisch erzeugte Schräglage liegt die Dichtungsscheibe 46 mit Dichtkanten 53 und 54 an der Innenoberfläche des Maschinenteils 40 und an der Außenoberfläche der Welle 41 dichtend an. Der Zwischenraum 42 ist abgedichtet. Die Stellung der Dichtungsscheibe 46 in der Figur 4 definiert die Arbeitslage der Dichtungsscheibe 46.

Figur 5 zeigt eine Dichtungsscheibe 56, die im Querschnitt rechteckförmig ist, in Positionslage und mit 56′ eine Dichtungsscheibe in Arbeitslage. Wird die mit einem Ringraum 55 versehene Dichtungsscheibe 56 in eine Position gebracht, so daß sie die Arbeitslage der Dichtungsscheibe 56′ annimmt, so entsteht jeweils am Außenmantel, wie auch im Innenmantel der Dichtungsscheibe 56′ ein Übermaß, das durch den Abstand von Pfeilen 57, 58 und 59, 60 in der Figur 5 dargestellt ist. Mit diesem nachträglich erzeugten Übermaß läßt sich ein Zwischenraum zwischen zwei Maschinenteilen dichtend schließen.

Figur 6 zeigt stark schematisiert den Verschwenkvorgang einer im Querschnitt dargestellten Dichtungsscheibe 61. Die Dichtungsscheibe 61 wird in Pfeilrichtung 62 um eine Drehachse 63 verschwenkt und zwar so weit, bis sie mit einer Stirnfläche 64 auf einer nicht dargestellten fest fixierten Fläche aufliegt (verschwenkte Dichtungsscheibe 61 ist gestrichelt gezeichnet). Über den Verschwenkvorgang kann ein zwischen den Pfeilen 65, 66 ausgewiesener Abstand überbrückt werden. Die Dichtungsscheibe 61 kann einfach in die Positionslage gebracht werden, weil sie in dem die Dichtungsscheibe 61 begrenzenden Raum von angrenzenden Flächen beabstandet ist. Der Abstand zu diesen Flächen wird durch den Verschwenkvorgang bis auf das Maß 0 reduziert und der Verschwenkvorgang wird noch so lange fortgeführt, bis eine gewünschte Verpressung zur angrenzenden Fläche stattgefunden hat.

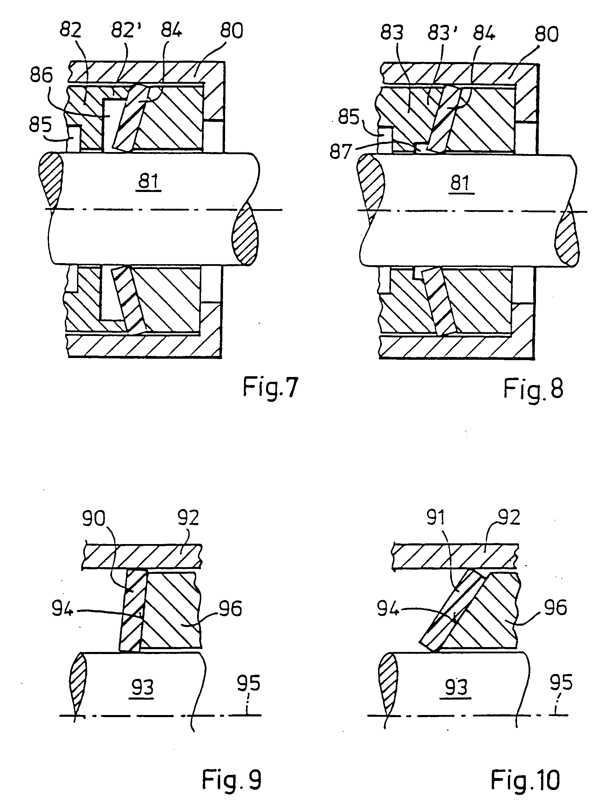

Figur 7 und 8 zeigen jeweils Ausschnitte eines ersten und zweiten Maschinenteils 80, 81 mit zwei extrem ausgebildeten Distanzringen 82, 83. Die beiden Distanzringe 82, 83 pressen über eine unterschiedliche radiale Länge von Abschnitten 82′, 83′ eine Dichtungsscheibe 84 in Arbeitslage. Liegt im Bereich 85 ein unter Druck stehendes Medium am Distanzring 82, 83 an, so kann es in den Raum 86, 87 strömen. Je nach Ausbildung der radialen Breite der Abschnitte 82′ und 83′ kann der Dichtring 84 unterschiedlich stark druckentlastet werden. In der Figur 8 ist die Dichtungsscheibe 84 stärker druckentlastet als in der Figur 7.

Figur 9 und Figur 10 zeigen Ausführungsbeispiele, wie die Dichtungsgeometrie einer Dichtungsscheibe 90, 91 zwischen zwei Maschinenteilen 92, 93 durch Schrägstellung des Dichtringes 90, 91 zu einer Stützfläche 94 veränderbar ist. Die Stützfläche 94 ist zur Achse 95 schräggestellt. Je nach Schräglage der Dichtungsscheibe 90, 91 an einem Distanzring 96 können unterschiedlich große Spaltweiten überbrückt werden. Auch die Breite der Dichtfläche läßt sich variieren.

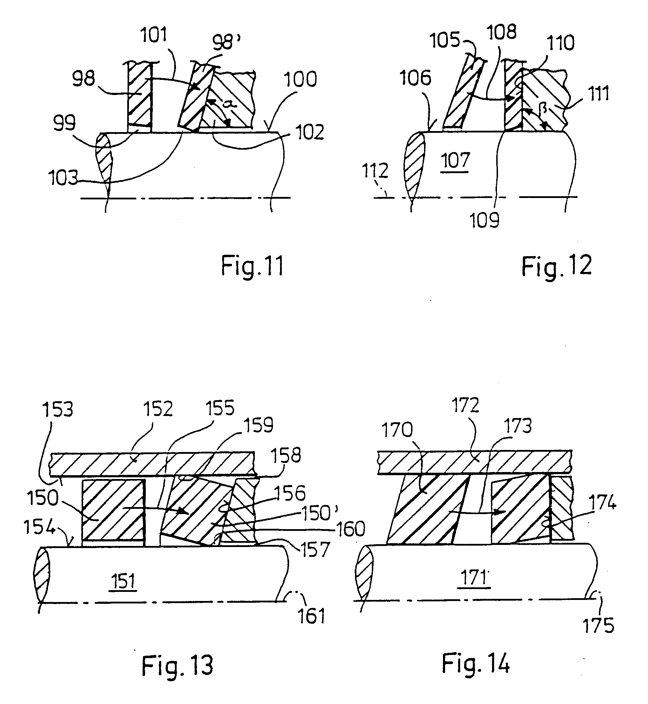

Figur 11 und Figur 12 zeigen Ausführungsbeispiele, wie sich Arbeitslagen aus Positionslagen erzeugen lassen. In der Figur 11 ist eine Dichtungsscheibe 98 gezeigt, die eine zur Dichtfläche 100 weisende Mantelfläche 99 aufweist, die gegenüber der Dichtfläche 100 schräggestellt ist. Wird die Dichtungsscheibe 98 über eine Verschwenkbewegung in Pfeilrichtung 101 in die Arbeitslage einer Dichtungscheibe 98′ überführt, so kann je nach Schrägstellung der Mantelfläche 99 zur Dichtfläche 100 bei konstantem Winkel α 102 ein unterschiedlich großer Öffnungswinkel 103 erzeugt werden.

In der Figur 12 ist eine Dichtungsscheibe 105 in Positionslage gegenüber einer Dichtfläche 106 schräggestellt. Die Dichtungsscheibe 105 wird schon schräggestellt auf einen Körper 107 aufgeschoben. Wird die Dichtungsscheibe 105 dann in Pfeilrichtung 108 verschwenkt, so liegt sie über eine Dichtkante 109 an der Dichtfläche 106 dichtend an. Eine Stützfläche 110 eines Distanzringes 111 steht lotrecht zur Achse 112. Die Stützfläche 110 kann auch eine Schräglage einnehmen, wobei der Winkel β größer als 90°, wie in der Figur gezeigt, ist.

Figur 13 zeigt einen im Querschnitt quadratisch ausgebildeten Dichtring 150 in Positionslage, wie er zwischen zwei Maschinenteilen 151 und 152 angeordnet ist. In Positionslage ist der Dichtring 150 von Dichtflächen 153, 154 beabstandet. Wird der Dichtring 150 in Pfeilrichtung 155 in die Arbeitslage durch nicht in der Figur gezeigte mechanische Mittel verschwenkt, so daß er mit einer Stirnfläche an der Stützfläche 156 anliegt, so ist ein Zwischenraum 157, 158 abgedichtet. Der Dichtring 150′liegt über Dichtkanten 159, 160 an den Dichtflächen 153, 154 dichtend an. Die Stützfläche 156 ist zur Achse 161 schräggestellt. Zwischen der Dichtfläche 154 und der Dichtkante 160 stellt sich ein zur Hochdruckseite hin offener Winkel ein.

Figur 14 zeigt eine im Querschnitt rautenförmige Dichtungsscheibe 170 in Positionslage. Die Dichtungsscheibe 170 ist zwischen Maschinenteilen 171, 172 angeordnet. Wird die Dichtungsscheibe 170 in Pfeilrichtung 173 in die Arbeitslage verschwenkt, so ist dies auch dann möglich, wenn die Stützfläche 174 zur Achse 175 lotrecht ausgebildet ist.

## Patentansprüche

1. Anordnung zum Abdichten eines Zwischenraumes (10) zwischen zwei zueinander konzentrischen, gegeneinander beweglichen Maschinenteilen (8, 9), mit einander gegenüberliegend angeordneten Dichtflächen (13, 14), die zu Randflächen (4a, 4b) von einem ringförmigen Dichtungselement (1) aus elastischem Kunststoff hinweisen, mit einer zwischen dem ersten und zweiten Maschinenteil (8, 9) angeordneten, axialfixierten Stützfläche (5) für eine Stirnfläche (4) des Dichtungselements (1), das in einer Positionslage von der Stützfläche (5) beabstandet ist und über einen Verschwenkvorgang in eine Arbeitslage überführbar ist, in der das Dichtungselement (1), an der Stützfläche (5) anliegend, den Zwischenraum (10) abdichtet, dadurch gekennzeichnet, daß das Dichtungselement (1) in der Positionslage von den beiden Dichtflächen (13, 14) beabstandet ist oder ohne Anpreßdruck an den Dichtflächen (13, 14) anliegt und daß das Dichtungselement (1) in der Arbeitslage über Dichtkanten (2, 3) an den Dichtflächen (13, 14) dichtend anliegt, derart, daß die Dichtkanten (2, 3) von der Schnittlinie der Randflächen (4a, 4b) und der Stirnflächen (4, 4′) gebildet sind.

2. Anordnung nach Anspruch 1, dadurch gekennzeichnet, daß die Stützfläche (94) kegelförmig ausgebildet ist.

3. Anordnung nach Anspruch 1, dadurch gekennzeichnet, daß sich die Stützfläche (110) als Planfläche orthogonal zur Achse der Anordnung erstreckt.

4. Anordnung nach einem der Ansprüche 1 bis 3, dadurch gekennzeichnet, daß das Dichtungselement als Dichtungsscheibe (56, 56′) einen zentralen Ringraum (55) aufweist, wobei der Durchmesser des Ringraumes (55) größer als der Außendurchmesser des von dem Ringraum (55) aufgenommenen Maschinenteils ist und daß der Außendurchmesser der Dichtungsscheibe (56) kleiner als der Durchmesser der dem Umfang der Dichtungsscheibe (56) benachbarten Dichtfläche eines Rings eines Maschinenteils ist.

5. Anordnung nach einem der vorherigen Ansprüche, dadurch gekennzeichnet, daß der Querschnitt des Dichtungselements (1) am Außenumfang rechteckförmig ist.

6. Anordnung nach einem der Ansprüche 1 bis 5,. dadurch gekennzeichnet, daß die Stützfläche (5) an einem separaten Formteil (6) angeordnet ist.

7. Anordnung nach einem der Ansprüche 1 bis 6, dadurch gekennzeichnet, daß die Stützfläche (5) an einem der beiden Maschinenteile (8, 9) ausgebildet ist.

8. Anordnung nach einem der Ansprüche 1 bis 7, dadurch gekennzeichnet, daß eine Gegenfläche (30) vorgesehen ist, die in Arbeitslage an der der Stützfläche (32) abgewandten Stirnfläche eines Dichtungselements (31) angreift und das Dichtungselement (31) an der Stützfläche (32) hält.

9. Anordnung nach Anspruch 4, dadurch gekennzeichnet, daß die Dichtungsscheibe (56′) in Arbeitslage durch das abzudichtende Medium in Anlage an der Stützfläche gehalten ist.

10. Anordnung nach Anspruch 8, dadurch gekennzeichnet, daß die Gegenfläche (30) eine der Stützfläche (32) angepaßte Form aufweist.

## Claims

1. Configuration for sealing a gap (10) between two mutually concentric machine parts (8, 9) which move relative to each other, with oppositely arranged sealing surfaces (13, 14) facing end surfaces (4a, 4b) of a ring shaped sealing element (1) made from elastic plastic and having, arranged between the first and the second machine parts (8, 9), an axially fixed support surface (5) for a front surface (4) of the sealing element (1) which, in a positioning location, is separated from the support surface (5) and can be transferred via a pivoting procedure into a working location in which the sealing element (1) seats on the support surface (5) to seal the gap (10), characterized in that the sealing element (1), in the positioning location, is separated from the two sealing surfaces (13, 14) or, without applied pressure, seats on the sealing surfaces (13, 14) and in that the sealing element (1), in the working location, seats in a sealing fashion via sealing edges (2, 3) on the surfaces (13, 14) in such a fashion that the sealing edges (2, 3) are formed by the line of intersection of the end surfaces (4a, 4b) and the front surface (4, 4′).

2. Configuration according to claim characterized in that the support surface (94) is conically shaped.

3. Configuration according to claim 1, characterized in that the support surfaces (110) extend, as planar surfaces, orthogonal to the axis of the configuration.

4. Configuration according to one of the claims 1 to 3, characterized in that the sealing element, configured as a sealing ring (56, 56′), exhibits a central annulus (55), whereby the diameter of the annulus (55) is larger than the outer diameter of the machine part accepted by the annulus (55) and in that the outer diameter of the sealing ring (56) is smaller than the diameter of the sealing surface of a ring of the machine part adjacent to the perimeter of the sealing ring (56).

5. Configuration according to one of the preceding claims, characterized in that the cross section of the sealing element (1) has a rectangular outer perimeter.

6. Configuration according to one of the claims 1 to 5, characterized in that the support surface (5) is arranged on a separate structural part (6).

7. Configuration according to one of the claims 1 to 6, characterized in that the support surface (5) is formed on one of the two machine parts (8, 9).

8. Configuration according to one of the claims 1 to 7, characterized in that an opposing surface (30) is provided for which, in the working location, engages the front surface of a sealing element (31) facing away from the support surface (32) and which holds the sealing element (31) on the support surface (32).

9. Configuration according to claim 4, characterized in that the sealing ring (56′) is held, in the working position, by means of the medium to be sealed to seat at the support surface.

10. Configuration according to claim 8, characterized in that the opposing surface (30) exhibits a shape which conforms to the support surface (32).

## Revendications

1. Agencement pour étancher un intervalle (10) entre deux parties de machine (8, 9) concentriques et mobiles l'une par rapport à l'autre, comprenant les surfaces d'étanchéité (13, 14) disposées l'une en face de l′autre et orientées vers des surfaces latérales (4a, 4b) d'un élément d'étanchéité annulaire (1) en matière plastique élastique, et comportant une face d'appui (5), fixée en direction axiale et agencée entre la première et la seconde partie de machine (8, 9), pour une face frontale (4) de l'élément d'étanchéité (1), celui-ci étant situé dans une position de repos à distance de la face d'appui (5) et pouvant être passé via un processus de basculement dans une position de travail dans laquelle l'élément d'étanchéité (1), appliqué contre la face d'appui (5), étanche l'intervalle (10), caractérisé en ce que l'élément d'étanchéité (1) dans la position de repos est écarté des deux surfaces d'étanchéité (13, 14) ou est appliqué sans pression contre les surfaces d'étanchéité (13, 14), et en ce que l'élément d'étanchéité (1) en position de travail est appliqué de façon étanche par l'intermédiaire d'arêtes d'étanchéité (2, 3) contre les surfaces d'étanchéité (13, 14), de telle manière que les arêtes d'étanchéité (2, 3) sont formées par les lignes de coupe des surfaces latérales (4a, 4b) et des surfaces frontales (4, 4′).

2. Agencement selon la revendication 1, caractérisé en ce que la face d'appui (94) est réalisée sous forme conique.

3. Agencement selon la revendication 1, caractérisé en ce que la face d'appui (110) s'étend, sous la forme d'une surface plane, perpendiculairement à l'axe de l'agencement.

4. Agencement selon l'une quelconque des revendications 1 à 3, caractérisé en ce que l'élément d'étanchéité, sous la forme d'un disque d'étanchéité (56, 56′) comporte une cavité annulaire centrale (55), le diamètre de la cavité annulaire (55) étant supérieur au diamètre extérieur de la partie de machine qui reçoit la cavité annulaire (55), et en ce que le diamètre extérieur du disque d'étanchéité (56) est inférieur au diamètre de la surface d'étanchéité, voisine de la périphérie du disque d'étanchéité (56), d'une bague d'une partie de machine.

5. Agencement selon l'une quelconque des revendications précédentes, caractérisé en ce que la section de l'élément d'étanchéité (1) à la périphérie extérieure est de forme rectangulaire.

6. Agencement selon l'une quelconque des revendications 1 à 5, caractérisé en ce que la face d'appui (5) est agencée sur une pièce en forme (6) séparée.

7. Agencement selon l'une quelconque des revendications 1 à 6, caractérisé en ce que la face d'appui (5) est réalisée sur l'une des deux parties de machine (8, 9).

8. Agencement selon l'une quelconque des revendications 1 à 7, caractérisé en ce qu'il est prévu une contre-surface (30), qui dans la position de travail attaque la face frontale d'un élément d'étanchéité (31) détournée de la face d'appui (32), et qui retient l'élément d'étanchéité (31) contre la face d'appui (32).

9. Agencement selon la revendication 4, caractérisé en ce que le disque d'étanchéité (56′) en position de travail est maintenu en appui contre la face d'appui au moyen du fluide à étancher.

10. Agencement selon la revendication 8, caractérisé en ce que la contre-surface (30) présente une forme adaptée à la face d'appui 32.
